# FASCICULE DE BREVET EUROPEEN

(11) **EP 3 044 070 B1**
(45) Date de publication et mention de la délivrance du brevet: **31.07.2019**
(21) Numéro de dépôt: 14780425.6
(22) Date de dépôt: 09.09.2014
(51) Int. Cl.: B62B 7/08

(54) **POUSSETTE PLIABLE ADAPTABLE AU TRANSPORT DES NOUVEAU-NES**
ZUSAMMENKLAPPBARER KINDERWAGEN UM NEUGEBORENE ZU TRAGEN
FOLDABLE STROLLER FOR CARYING NEWBORNS

(30) Priorité: 13.09.2013 FR 1358847
(43) Date de publication de la demande: 20.07.2016
(73) Titulaire: BABYZEN, 13100 Aix-en-Provence (FR)
(72) Inventeur: HENRY, Gilles, 75016 Paris (FR); CHAUDEURGE, Jean-Michel, 83170 Tourves (FR)
(74) Mandataire: Osha Liang
(86) Numéro de dépôt international: PCT/EP2014/069177
(87) Numéro de publication internationale: WO 2015/036395

(56) Documents cités:
- GB-A- 158 108
- GB-A- 1 362 160

## Description

### DOMAINE TECHNIQUE

La présente invention concerne une poussette pliable utilisable dès la naissance, mobile entre une position dépliée, ou déployée, et une position repliée.

### ARRIERE PLAN

Dans l'art antérieur, il existe de nombreux types de poussettes pliables. On distingue notamment la catégorie des poussettes pliables à plat, dans lesquelles l'ensemble des articulations permettant de replier la structure ont des axes de rotation parallèles, et orientés suivant une direction transversale par rapport au sens de déplacement de la poussette.

La demande de brevet US 5087066 illustre un exemple de poussette pliable à plat, et dont les transformations de la position dépliée vers la position repliée et inversement, sont simples.

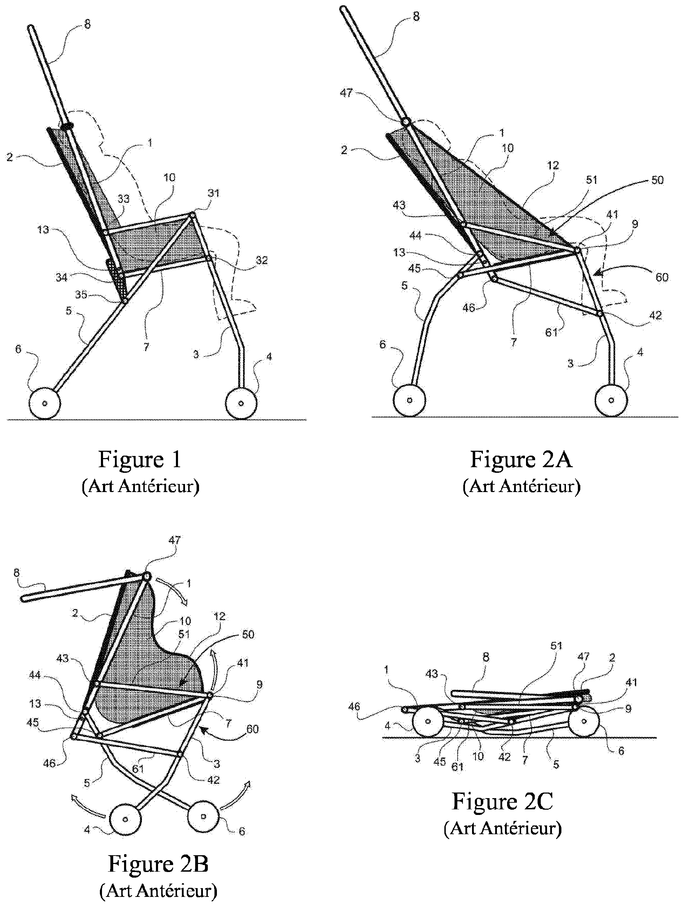

La figure 1 illustre, selon une vue latérale schématique, un exemple de poussette pliable à plat selon ce premier type de pliage, la poussette étant représentée en position dépliée.

La structure de la poussette comprend un certain nombre d'éléments dont des montants de poussoir 1,1', un dossier inclinable 2, des jambes avant 3, 3' équipées de moyens de roulement 4, 4', des jambes arrière 5, 5' équipées de moyens de roulement 6, 6', des supports d'assise 7,7', un poussoir 8, monté en prolongement des montants de poussoir 1, 1'. Sur la vue latérale de la figure 1, les éléments 1', 3', 4', 6', 7' ne sont pas visibles. En outre, la structure de la poussette comprend un certain nombre d'articulations 31, 32, 33, 34, 35, dont l'axe de rotation est perpendiculaire au plan de la vue, et permettant le pliage de la poussette. Enfin, la structure est équipée d'éléments textiles pour l'ergonomie et le confort de l'enfant, notamment une base textile 10. Le dossier inclinable 2 est monté pivotant sur la structure de la poussette, au moyen d'une articulation 13 dont l'axe de rotation est parallèle aux articulations 31, 32, 33, 34, 35, 36 de pliage de la poussette.

Une telle poussette est adaptée au transport d'un enfant en position assise ou inclinée, face orientée dans le sens de roulage de la poussette.

La demande de brevet FR 2933362 illustre un autre exemple de poussette selon l'art antérieur, qui offre l'avantage d'être particulièrement compacte en position repliée. En effet, ce document décrit une poussette pliable dont le bord supérieur du dossier vient, en position pliée, se superposer à l'extrémité supérieure de la jambe avant, ainsi que l'extrémité inférieure de la jambe arrière. Ainsi, le dossier, la jambe avant et la jambe arrière, qui ont tous les trois une longueur sensiblement équivalente, se retrouvent superposés en position repliée. Par conséquent, la plus grande dimension d'une telle poussette en position pliée est sensiblement égale la hauteur du dossier.

Les figures 2A à 2C illustrent, selon une vue latérale schématique, un exemple de poussette pliable à plat selon ce deuxième type de pliage, la poussette étant représentée respectivement en position dépliée (figure 2A), en position semi-pliée (figure 2B) et en position repliée (figure 2C).

La structure de la poussette comprend, en plus des montants de poussoir 1,1', du dossier inclinable 2, des jambes avant 3, 3', des jambes arrière 5, 5', des supports d'assise 7, 7' et du poussoir 8 tels que décrits précédemment, des bielles de dossier 51, 51', des bielles de jambe avant 61, 61', ainsi qu'un certain nombre d'articulations 41, 42, 43, 44, 45, 46, 47, dont l'axe de rotation est perpendiculaire au plan de la vue, et permettant le pliage à plat de la poussette. L'extrémité supérieure des jambes avant 3, 3' est montée pivotante sur l'articulation 41 dont l'axe correspond au bord avant 9 de l'assise formée entre les supports d'assise 7, 7'. L'extrémité supérieure des jambes arrière 5, 5' est montée pivotante sur l'articulation 44 située dans la partie inférieure des montants de poussoir 1, 1'. La bielle de dossier 51 est montée pivotante d'une part sur l'articulation 41, et d'autre part sur l'articulation 43 située sur un point intermédiaire des montants de poussoir 1, 1'. La bielle de jambe avant 61 est montée pivotante d'une part sur l'articulation 42 située sur un point intermédiaire des jambes avant 3, 3', et d'autre part sur l'articulation 46 située à l'extrémité inférieure des montants de poussoir 1, 1'. Le poussoir 8 est monté pivotant sur les montants de poussoir 1, 1' autour de l'articulation 47.

En vue latérale, la figure constituée par les articulations 41, 43, 44, 45 est un quadrilatère déformable 50 situé dans la partie centrale de la structure de la poussette. En position dépliée (figure 2A), ce quadrilatère 50 a la forme d'une pointe de flèche. Lors du pliage de la poussette (figures 2B et 2C), ce quadrilatère 50 se déforme, par l'éloignement relatif de l'articulation 44 par rapport à l'articulation 41.

Par ailleurs, la figure constituée par les articulations 41, 43, 46, 42 est un pseudo-parallélogramme déformable 60. Le pseudo-parallélogramme 60 est assujetti au quadrilatère 50, dans la mesure où les articulations 43, 44 et 46 sont fixées sur un même élément de structure de la poussette, en l'occurrence les montants de poussoir 1, 1'. Ainsi, la déformation du quadrilatère 50 décrite précédemment entraîne une déformation concomitante du pseudo-parallélogramme 60.

Il résulte de la structure ainsi décrite, lors du mouvement de la poussette de sa position dépliée à sa position repliée, le basculement vers l'avant des extrémités inférieures des jambes arrières 5, 5', le basculement vers l'arrière des extrémités inférieures des jambes avant 4, 4', le repliement des montants du poussoir 1, 1' contre les supports d'assise 7, 7', de telle sorte que les bords supérieurs des montants du poussoir 1, 1' viennent en vis-à-vis de l'extrémité avant 9 des supports d'assise 7, 7' et des extrémités supérieures des jambes avant 3, 3', pour former un pliage particulièrement compact.

Une base textile 10 est fixée sur la structure de la poussette notamment grâce à des tendeurs 12, 12' reliant l'extrémité supérieure des montants de poussoir 1, 1' au bord avant 9 de l'assise formée entre les supports d'assise 7, 7' (sur les figures 2A à 2C, l'élément 12' n'est pas visible). Ces tendeurs 12, 12' permettent le déploiement des flancs de la base textile 10, formant ainsi une protection latérale avantageuse pour l'enfant assis dans la poussette. Lors du pliage de la poussette (Figure 2B), l'extrémité supérieure du montant de poussoir 1 se rapproche du bord avant 9 de l'assise. Lorsque la poussette est entièrement repliée (Figure 2C), la partie supérieure du dossier 1, et par conséquent le bord supérieur du dossier 2 viennent, en position pliée, se superposer au bord avant 9 de l'assise. La poussette pliable ainsi réalisée est compacte car sa plus grande dimension est sensiblement égale à la longueur du montant de poussoir.

Cependant, les poussettes précitées ne sont pas pleinement satisfaisantes pour le transport d'un nouveau-né. En effet, elles sont conçues pour le transport d'un enfant face à la route. Or l'usage veut que pour un enfant de moins de 6 mois, la meilleure position de transport soit face au parent qui pousse la poussette, à plat ou en position très allongée.

Pour remédier à cet inconvénient, il existe dans l'art antérieur de nombreux types de couffins pliables s'adaptant sur des poussettes, et permettant de les compléter pour le transport d'un nouveau-né. La demande de brevet DE 19748902 illustre un exemple de couffin pliable selon l'art antérieur. Cependant, un tel dispositif n'est pas pleinement satisfaisant dans le cas d'une poussette du type de celles précitées, car il doit être retiré préalablement au pliage, ou s'il devait être plié simultanément avec la poussette, empêcherait de maintenir un pliage compact. De plus, il n'est pas muni d'une capote de protection protégeant efficacement le nouveau-né des effets du soleil.

L'invention a pour but de remédier à ces inconvénients en proposant une poussette pliable à plat utilisable dès la naissance, équipée d'une capote de protection et facilement mobile entre une position dépliée et une position repliée.

### PRESENTATION GENERALE

À cet effet et selon un premier aspect défini dans la revendication 1, l'invention concerne une poussette pour enfant pliable à plat, mobile entre une position dépliée et une position repliée, comportant :
- une structure comprenant deux montants de poussoir, au moins une jambe avant, au moins une jambe arrière, des supports d'assise, un dossier et des articulations pour le pliage à plat de la poussette;
- une base textile;
- des tendeurs pour la mise en tension d'une partie antérieure de la base textile, et reliant chacun une extrémité supérieure d'un montant de poussoir à un élément de la structure situé à l'avant de la poussette ;
- une capote de protection avec au moins un arceau principal;

Selon le premier aspect de la présente description :
- la capote de protection comprend en outre des éléments de fixation permettant de fixer chaque côté de l'arceau principal à au moins un point de fixation de chacun des tendeurs ou à au moins un point de fixation de la partie antérieure de la base textile, avantageusement à proximité des tendeurs;
- en position dépliée, le dossier est positionné pour accueillir un enfant au moins dans une position allongée en étant tourné vers l'arrière de la poussette, ledit dossier étant en outre maintenu contre les supports d'assise, grâce à un system de fixation;
- en position dépliée, les tendeurs sont tendus et permettent le déploiement de la partie antérieure de la base textile et de la capote de protection;
- lors du pliage, le basculement vers l'avant des montants de poussoir permet de détendre les tendeurs, entraînant le repliement de la partie antérieure de la base textile et de la capote de protection.

La poussette ainsi décrite est une poussette pliable à plat adaptée au transport d'un nouveau-né face au parent, qui présente en outre une capote de protection pour l'enfant qui se déploie et se met en tension automatiquement lors du dépliage de la poussette.

Selon une variante, l'arceau principal de la capote de protection est monté sur un élément de la structure, au moyen d'une articulation d'axe perpendiculaire au sens de déplacement de la poussette. Cette configuration permet d'assurer une excellente tension de la capote lorsque la poussette est dépliée.

Selon une variante, les éléments de fixation de la capote de protection sont détachables, et peuvent être éventuellement repositionnables à différentes positions des tendeurs ou de la base textile. Dans ce cas, la capote de protection se déploie lors du dépliage de la poussette dans la position qui était la sienne préalablement au pliage.

Selon une variante, une partie antérieure de la capote de protection est maintenue fixée sur la partie supérieure du dossier, pour contribuer à assurer une très bonne tension de la capote de protection lorsque la poussette est dépliée.

Selon une variante, les tendeurs relient chacun une extrémité supérieure d'un montant de poussoir à une partie supérieure du dossier, afin d'assurer une meilleure protection latérale à l'enfant.

Selon une variante, le dossier est monté pivotant sur un élément de la structure, au moyen d'une articulation d'axe perpendiculaire au sens de déplacement de la poussette. Cela permet de régler éventuellement la position du dossier et aussi de faciliter le pliage.

Selon une variante, le dossier est réversible, pouvant passer en position dépliée de la poussette, d'une première position adaptée pour accueillir un enfant en position allongée, tourné vers l'arrière de la poussette, à une deuxième position adaptée pour accueillir un enfant en position assise, tourné vers l'avant de la poussette. Cette configuration particulièrement avantageuse permet de garder une même structure pour deux poussettes, l'une adaptée au transport d'un nouveau-né face au parent, l'autre adaptée au transport d'un enfant tourné vers l'avant.

Selon une variante, une partie postérieure de la base textile est munie d'une plaque rigide, pour le maintien du nouveau-né.

Selon une variante, la poussette comprend en outre une plaque dorsale rigide ou semi-rigide dont une extrémité postérieure est montée pivotante au fond de la base textile, afin de pouvoir régler la position de l'enfant dans la poussette.

Selon une variante, le pliage de la poussette est un pliage du type décrit au moyen des figures 2A à 2C, dans lequel les articulations permettent, lors du mouvement de la poussette de sa position dépliée à sa position repliée, le basculement vers l'avant des extrémités inférieures des jambes arrières, le basculement vers l'arrière des extrémités inférieures des jambes avant, le repliement des montants du poussoir contre le support d'assise, les bords supérieurs des montants du poussoir venant en vis-à-vis de l'extrémité avant du support d'assise et des extrémités supérieures des jambes avant. Ce type de pliage est particulièrement avantageux pour avoir une poussette en position repliée de très faible encombrement, et ce malgré la base textile et la capote.

Avantageusement, selon cette dernière variante, l'arceau principal de la capote de protection est monté de chaque côté de la poussette sur une extrémité supérieure de la jambe arrière, au moyen d'une articulation d'axe perpendiculaire au sens de déplacement de la poussette. Avantageusement, l'axe de l'articulation de l'arceau principal est décalé par rapport à l'articulation de la jambe arrière sur le montant de poussoir. Cette configuration particulière permet, lors du pliage de la poussette, d'éloigner du bord de l'assise formée entre les supports d'assise, l'articulation de l'arceau principal, de telle sorte que celui-ci occupe un encombrement minimal par rapport à la structure de la poussette.

De la même manière, le dossier est avantageusement monté pivotant sur une extrémité inférieure des montants de poussoir au moyen d'une articulation d'axe perpendiculaire au sens de déplacement de la poussette, permettant lors du pliage, d'éloigner l'articulation du dossier du bord de l'assise, de telle sorte que celui-ci occupe un encombrement minimal par rapport à la structure de la poussette.

### BREVE DESCRIPTION DES DESSINS

D'autres objets et avantages de l'invention apparaîtront au cours de la description qui suit, faite en référence aux dessins annexés, dans lesquels :
- la figure 1 est une vue latérale schématique d'un exemple de poussette selon l'art antérieur, mettant en oeuvre un premier type de pliage, en position dépliée (déjà décrite);
- les figures 2A à 2C sont des vues latérales schématiques d'un exemple de poussette selon l'art antérieur, mettant en oeuvre un deuxième type de pliage, respectivement en position dépliée, semi-pliée et pliée (déjà décrites);
- les figures 3A et 3B sont des vues latérales schématiques d'un exemple de poussette selon l'invention, mettant en oeuvre le premier type de pliage, respectivement en position dépliée et semi-pliée;
- les figures 4A et 4B sont des vues latérales schématiques d'un exemple de poussette selon l'invention, mettant en oeuvre le deuxième type de pliage, respectivement en position dépliée et semi-pliée;
- les figures 5A et 5B sont des vues en perspective de l'exemple de poussette représenté sur les figures 4A et 4B, mettant en oeuvre le deuxième type de pliage, respectivement sans éléments textiles et avec éléments textiles ;
- la figure 6 est une vue de détail d'un type de réalisation du système de fixation de la capote de protection sur la structure d'une poussette mettant en oeuvre le deuxième type de pliage;
- les figures 7A et 7B sont des vues latérales schématiques, en coupe longitudinale, d'une variante de réalisation de l'invention.

### DESCRIPTION DETAILLEE D'EXEMPLES

Dans les figures, les éléments identiques sont repérés par les mêmes références.

Une « articulation » ou un « système d'articulation », est compris dans la présente demande comme tout dispositif permettant une liberté de pivotement entre deux pièces.

L' « avant » et l' « arrière » de la poussette sont définis selon le sens de déplacement habituel de celle-ci.

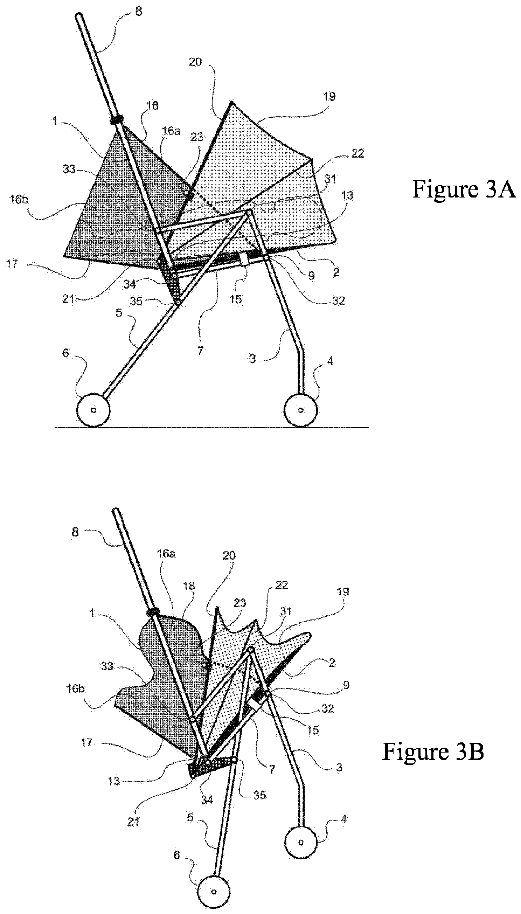

Les figures 3A et 3B représentent un premier mode de réalisation de l'invention, mettant en oeuvre un premier type de pliage du type de celui décrit au moyen de la figure 1, respectivement en position dépliée et semi-pliée.

Le dossier 2 est rabattu sur l'assise formée entre les supports d'assise 7, 7'. Il est maintenu plaqué contre ladite assise grâce à un système de fixation 15. A titre d'exemple, ce système de fixation 15 peut comprendre au moins une sangle fixée aux supports d'assise 7, 7'. En particulier, le système de fixation 15 peut être constitué d'une sangle. Bien entendu, d'autres types de système de fixation pourraient être utilisés pour maintenir le dossier 2 rabattu.

De manière avantageuse, le dossier 2 peut être conçu de manière à être réversible, c'est-à-dire facilement démontable des montants de poussoir 1,1', puis positionnable à volonté sur une articulation 13 de la structure, soit orienté dans le sens de la marche de la poussette, vers l'avant de la poussette, soit orienté dans le sens inverse, vers l'arrière de la poussette.

La ou les sangles du système de fixation peuvent être élastiques et/ou détachables par rapport aux supports d'assise 7, 7'. Ceci permet notamment de faciliter le démontage et/ou le repositionnement du dossier 2.

Ainsi le dossier 2 peut être positionné afin d'offrir, en position dépliée, un support adapté à la partie supérieure du corps d'un enfant de moins de 6 mois qui serait positionné dans une position inclinée ou allongée, et tourné vers le parent poussant la poussette.

En outre, la structure de la poussette est équipée d'une base textile 16, constituée d'une partie antérieure 16a et d'une parte postérieure 16b.

La partie postérieure 16b est configurée pour offrir un support adapté à la partie inférieure du corps du nouveau-né. Avantageusement, le fond de ladite partie postérieure 16b est muni d'une plaque rigide 17.

La partie antérieure 16a de la base textile 16 est fixée sur la structure de la poussette notamment grâce à des tendeurs 18, 18' (sur les vues latérales des figures 3A et 3B, seul le tendeur 18 est apparent, reliant l'extrémité supérieure des montants de poussoir 1, 1' à un élément de la structure situé à l'avant de la poussette, par exemple à l'avant des supports d'assise 7, 7'. Lorsque la poussette est en position dépliée, les tendeurs 18, 18' sont mis en tension.

Ainsi, en position dépliée, les flancs de la base textile 16 forment une protection latérale avantageuse pour le transport d'un nouveau-né.

La poussette selon l'invention est également munie d'une capote de protection 19, comportant un arceau principal 20, rigide ou semi-rigide, monté pivotant sur un élément de structure de la poussette, au moyen d'une articulation 21 dont l'axe de rotation est perpendiculaire au plan de la vue. Alternativement, l'arceau principal 20 peut être monté sur la base textile 16, mais la capote sera moins bien tendue en position dépliée.

Avantageusement, la capote de protection 19 comporte également un ou plusieurs arceaux secondaires 22, rigides ou semi-rigides, et qui permettent d'augmenter le volume interne de la capote de protection 19 en position dépliée.

En outre, la capote de protection 19 comporte des éléments de fixation 23, 23', permettant de fixer chaque côté de l'arceau principal 20 à la base textile 16, avantageusement à proximité des tendeurs 18, 18' ou directement sur les tendeurs. De plus, la partie antérieure de la capote de protection 19 est avantageusement maintenue fixée sur la partie supérieure du dossier 2. Ainsi, la mise en tension des tendeurs 18, 18' permet, grâce à l'action du système de fixation 15 maintenant le dossier 2 plaqué contre l'assise formée entre les supports d'assise 7, 7', de mettre en tension la capote de protection 19.

Lors du pliage de la poussette (Figure 3B), l'extrémité supérieure des montants de poussoir 1, 1' se rapproche du bord avant 9 de l'assise formé entre les extrémités avant des supports d'assise 7, 7'. Ceci a pour effet de détendre les tendeurs 18, 18' permettant simultanément le repliement de la partie antérieure 16a de la base textile 16, ainsi que le repliement de la capote 19, afin que ces deux éléments occupent un encombrement réduit en position pliée.

Par ailleurs, lors de cette opération de pliage, la partie postérieure 16b de la base textile 16 peut être repliée aisément, par exemple en relevant la plaque rigide 17.

A l'inverse, lors du dépliage de la poussette (passage de la Figure 3B à la Figure 3A), les tendeurs 18, 18' sont à nouveau mis en tension. En effet, les points de fixation de ces tendeurs 18, 18', en l'occurrence l'extrémité supérieure des montants de poussoir 1, 1' et le bord avant 9 de l'assise, sont deux éléments de la structure de la poussette qui s'éloignent l'un de l'autre au cours du dépliage. Par conséquent, lors du dépliage de la poussette :
- d'une part, la partie antérieure 16a de la base textile 16 se déploie, et
- d'autre part, grâce à l'action des éléments de fixation 23, 23' sur l'arceau principal 20, la capote 19 se déploie et se met en tension automatiquement, ce qui offre l'avantage pour l'utilisateur de la poussette de ne pas avoir à relever manuellement ladite capote 19 après avoir déplié la poussette.

Avantageusement, les éléments de fixation 23, 23' sont détachables, et il est également possible de prévoir un point de fixation intermédiaire (non représenté) des dits éléments de fixation 23, 23', situé plus bas le long des tendeurs 18, 18'. Ainsi, lorsque la poussette est en position dépliée, il est possible, soit de rabaisser complètement la capote 19 en détachant les éléments de fixation 23, 23', soit de replier partiellement ladite capote 19 en fixant les éléments de fixation 23, 23' au point de fixation intermédiaire. Ces configurations n'affectent pas le pliage de la poussette tel que décrit dans la Figure 3B. A l'inverse, lors du dépliage de la poussette, selon que les éléments de fixation 23, 23' auront été laissés détachés, en position intermédiaire ou en position haute, la capote 19 reprendra respectivement une position abaissée, semi-abaissée ou relevée. Ainsi, on dispose d'un dispositif permettant avantageusement de mémoriser la position de la capote lors des opérations de pliage/dépliage.

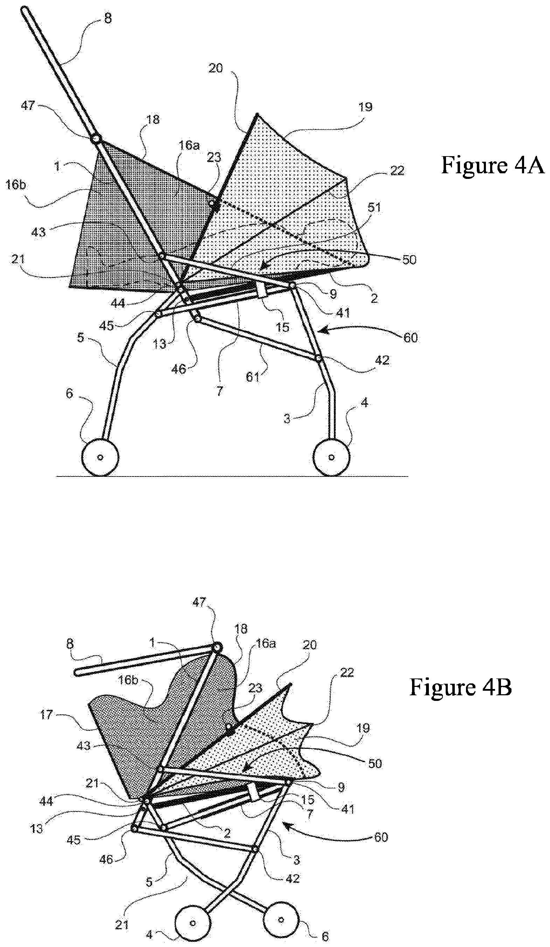

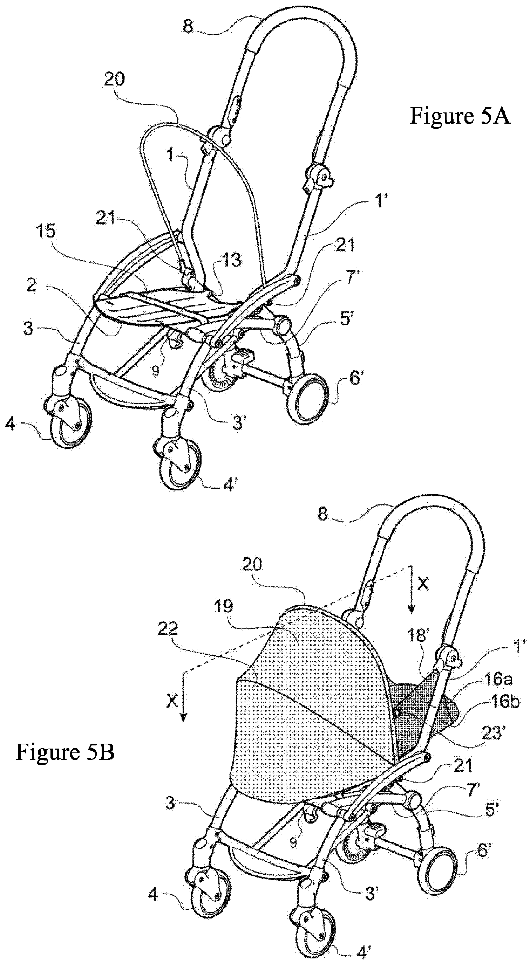

Les figures 4A et 4B représentent un deuxième mode de réalisation de l'invention, mettant en oeuvre le deuxième type de pliage tel qu'illustré au moyen des figures 2A à 2C, respectivement en position dépliée et semi-pliée. Les Figures 5A et 5B montrent une vue en perspective de la structure d'un exemple de poussette du type de celle représentée sur les figures 4A, 4B, respectivement sans ses éléments textiles, puis équipée de ses éléments textiles, notamment la base textile 16 et la capote de protection 19.

Comme précédemment, en position dépliée, le dossier 2 est positionné pour accueillir un enfant dans une position allongée en étant tourné vers l'arrière de la poussette. Le dossier est maintenu contre les supports d'assise 7, 7' grâce au système de fixation 15. Dans cet exemple, le système de fixation 15, par exemple une sangle fixée aux supports d'assise 7, 7', permet la translation du dossier 2 le long des supports d'assise 7, 7'. En particulier, comme représenté sur les figures (voir, par exemple, la Figure 5A), les supports d'assise 7, 7' peuvent s'étendre respectivement des deux côtés du dossier 2, et le dossier 2 peut se translater ou coulisser sous la sangle qui est fixée aux supports d'assise 7, 7' et qui s'étend au dessus du dossier 2.

Dans ce mode de réalisation, les tendeurs 18, 18' relient l'extrémité supérieure des montants de poussoir 1, 1' à la partie supérieure du dossier inclinable 2. Lorsque la poussette est en position dépliée (Figure 4A), les tendeurs 18, 18' sont mis en tension, grâce à l'action du système de fixation 15 maintenant le dossier 2 plaqué contre l'assise.

Dans cet exemple, le dossier 2 est monté pivotant sur un élément de la structure, avantageusement sur une partie inférieure des montants de poussoir 1, 1' au moyen d'une articulation 13 d'axe perpendiculaire au sens de déplacement de la poussette. Comme expliqué précédemment, lors du pliage de la poussette (Figure 4B), le quadrilatère 50 formé par les points d'intersection des articulations 41, 43, 44, 45 avec un plan de coupe latérale se déforme, ce qui entraîne du fait du positionnement de l'articulation 13 du dossier 2 sur la partie inférieure des montants de poussoir, l'éloignement de l'articulation 13 de l'articulation 41, avantageusement superposée au bord avant 9 de l'assise définie par les extrémités des supports d'assise 7, 7'. Par conséquent, le dossier 2 coulisse en reculant le long des supports d'assise 7, 7', tout en étant maintenu plaqué contre lesdits supports d'assise 7, 7' grâce au système de fixation 15. Lorsque la poussette est entièrement repliée, le dossier 2 se retrouve donc sensiblement dans la même position que dans la configuration de la poussette décrite dans la Figure 2C, c'est-à-dire que la partie supérieure du dossier 2 se retrouve repliée sensiblement au même niveau que la partie supérieure des montants de poussoir 1, 1', et que l'articulation 41 située au bord avant 9 de l'assise.

En outre, lors de cette opération de pliage, les extrémités supérieures des montants de poussoir 1, 1' se rapprochent de la partie supérieure du dossier inclinable 2. Ceci a pour effet de détendre les tendeurs 18, 18', permettant le repliement de la base textile 16 afin qu'elle occupe un encombrement réduit en position pliée.

Comme dans l'exemple précédent, la poussette est également munie d'une capote de protection 19, comportant un arceau principal 20, rigide ou semi-rigide, avantageusement fixée sur la structure de la poussette au moyen d'une articulation 21.

Dans l'exemple représenté sur les figures 4A, 4B, l'articulation 21 est agencée sur les extrémités supérieures des jambes arrière 5, 5'.

Avantageusement, l'axe de l'articulation 21 est décalé par rapport à l'axe de l'articulation 44 des jambes arrière 5, 5' par rapport au support de dossier 1, et situé au-dessus et en arrière de ladite articulation 44, lorsque la poussette est en position dépliée. Ainsi, lors du repliement de la poussette (Figure 4B), l'arceau principal 20 pivote librement autour de l'articulation 21. En outre au cours de cette opération, du fait de la rotation de la jambe arrière 5 par rapport au support d'assise 7, ainsi que de la position décalée de l'axe de l'articulation 21 par rapport à l'axe de l'articulation 44, ladite articulation 21 s'éloigne du bord avant 9 de l'assise. Ainsi, en position repliée, l'arceau principal 20 occupe un encombrement minimal par rapport à la structure de la poussette. Il est donc possible de dimensionner cet arceau principal 20 avec une hauteur suffisante pour offrir un volume optimal à la capote 19 en position dépliée, sans que ledit arceau principal 20 augmente de manière significative les dimensions de la poussette en position repliée.

Ainsi, une fois complètement repliée, la poussette selon l'invention occupe un volume sensiblement égal à celui de la poussette de l'art antérieur telle que représentée sur la Figure 3C, sans qu'il ait été besoin d'en retirer un quelconque élément.

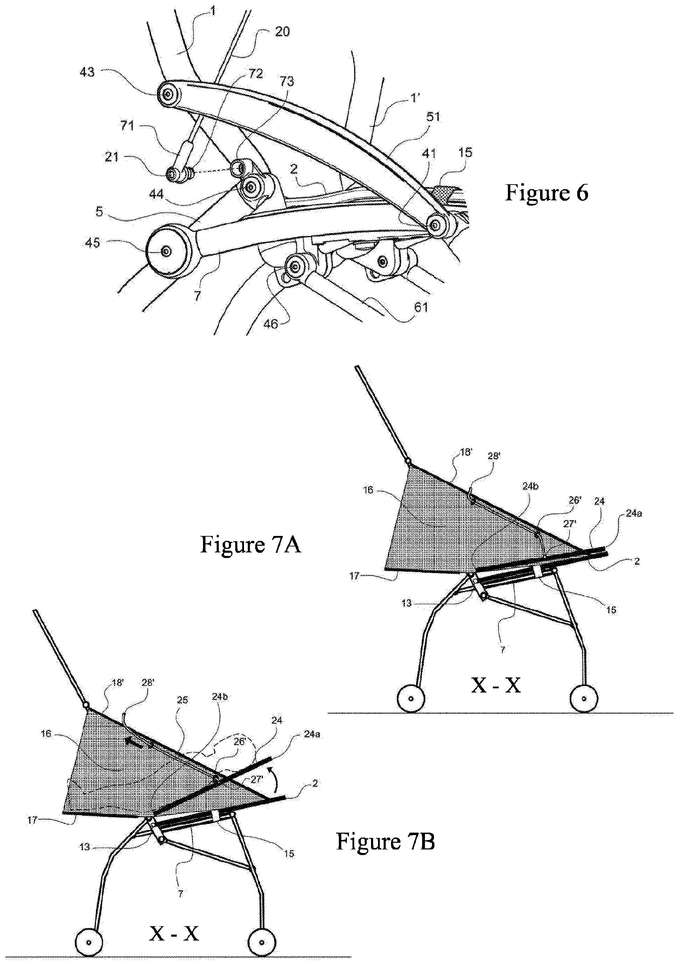

La figure 6 est une vue en perspective d'un détail de la structure d'une poussette pliable selon l'invention. Elle illustre un exemple de fixation de l'articulation 21 de l'arceau principal 20 sur la structure de la poussette, aux extrémités supérieures des jambes arrière 5 et à proximité de l'articulation 44.

Dans cet exemple, l'articulation 21 comporte de chaque côté de la poussette, un premier embout 71 muni d'un orifice permettant de recevoir l'arceau principal 20, et un deuxième embout 72 dont l'axe est perpendiculaire à celui de l'embout 71. L'embout 71 pénètre dans un logement cylindrique 73 fixé à l'extrémité supérieure de la jambe arrière 5, dont l'axe est situé légèrement au-dessus et en arrière de l'axe de l'articulation 44.

Les Figures 7A et 7B montrent une vue schématique, en coupe longitudinale selon le plan médian X-X de la poussette représenté sur la figure 5B, d'une variante de réalisation de l'invention.

Dans cette variante, la base textile 16 est équipée d'un dispositif complémentaire comprenant notamment une plaque dorsale 24, formée dans un matériau rigide ou semi-rigide. L'extrémité antérieure 24a de ladite plaque dorsale 24 est libre, tandis que son extrémité postérieure 24b est fixée au fond de la base textile 16. Ainsi, la plaque dorsale 24 peut pivoter en rotation par rapport au fond de la base textile 16.

En position basse, la plaque dorsale 24 est sensiblement plaquée sur le dossier 2.

En outre, la plaque dorsale 24 est équipée d'un système de relevage intégré aux flancs intérieurs de la base textile 16, comprenant par exemple des éléments de traction 25, 25', du type câble ou sangle, pouvant coulisser à l'intérieur de ladite base textile 16. A cet effet, chaque élément de traction 25, 25' passe notamment au travers d'un oeillet 26, 26' aménagé dans la base textile 16. Les extrémités inférieures 27, 27' des éléments de traction 25, 25' sont par ailleurs fixées à la plaque dorsale 24.

Lorsqu'on exerce une traction sur l'extrémité supérieure 28, 28' des éléments de traction 25, 25' (Figure 7B), la plaque dorsale 24 se relève en pivotant sur son extrémité postérieure 24b, et peut alors être maintenue en position haute grâce à un quelconque système de verrouillage non représenté. La base textile 16 offre alors une position assise ou semi-assise pour le nouveau-né.

Le maintien de la plaque dorsale 24 en position haute n'affecte pas le pliage de la poussette tel que décrit dans les exemples des figures 3B ou 4B. En effet, dès que les tendeurs 18, 18' ne sont plus en tension, la plaque dorsale 24 est libre de se plaquer à nouveau contre le dossier 2. A l'inverse, lors du dépliage de la poussette, selon que les éléments de traction 25, 25' auront été laissés en position basse ou en position haute, la plaque dorsale 24 reprendra respectivement une position abaissée ou relevée, grâce à la mise en tension des tendeurs 18, 18'. Ainsi, on dispose d'un dispositif avantageux permettant de mémoriser la position de l'assise lors des opérations de pliage/dépliage.

Ainsi, grâce à l'invention qui vient d'être décrite, il est possible de disposer d'une poussette adaptée au transport d'un nouveau-né face au parent, très simple à déplier et à replier sans avoir à en démonter un quelconque élément, et munie d'une capote de protection efficace. Ce dispositif présente en outre l'avantage que la capote de protection se déploie automatiquement lors du dépliage de la poussette, dans la position qui était la sienne préalablement au pliage. De même, si ce dispositif est complété par une plaque dorsale réglable, cette plaque dorsale reprend lors du dépliage la position qui était la sienne préalablement au pliage. Dans le cas de l'application de l'invention à une poussette présentant un type de pliage tel que décrit au moyen des figures 2A à 2C, l'invention permet en outre d'offrir un très faible encombrement en position repliée, malgré la présence de la base textile et de la capote.

L'invention est décrite dans ce qui précède à titre d'exemple. Il est entendu que l'homme du métier est à même de réaliser différentes variantes de réalisation de l'invention dans le cadre des revendications.

## Revendications

1. Poussette pliable à plat, mobile entre une position dépliée et une position repliée, comportant :
- une structure comprenant deux montants de poussoir (1, 1'), au moins une jambe avant (3, 3'), au moins une jambe arrière (5, 5'), des supports d'assise (7, 7'), un dossier (2) et des articulations (31-35, 41-47) pour le pliage à plat de la poussette ;
- une base textile (16) ;
- des tendeurs (18, 18') pour la mise en tension d'une partie antérieure (16a) de la base textile (16), et reliant chacun une extrémité supérieure d'un montant de poussoir (1, 1') à un élément de la structure situé à l'avant de la poussette ;
- une capote de protection (19) avec au moins un arceau principal (20) ;
ladite poussette étant **caractérisée en ce que** :
- la capote de protection (19) comprend en outre des éléments de fixation (23, 23') permettant de fixer chaque côté de l'arceau principal (20) à au moins un point de fixation de chacun des tendeurs (18, 18') ou à au moins un point de fixation de la partie antérieure (16a) de la base textile (16);
- en position dépliée, le dossier (2) est positionné pour accueillir un enfant au moins dans une position allongée en étant tourné vers l'arrière de la poussette, ledit dossier étant en outre maintenu contre les supports d'assise (7, 7'), grâce à un système de fixation (15);
- en position dépliée, les tendeurs (18, 18') sont tendus et permettent le déploiement de la partie antérieure (16a) de la base textile (16) et de la capote de protection (19) ;
- lors du pliage, le basculement vers l'avant des montants de poussoir (1, 1') permet de détendre les tendeurs (18, 18'), entraînant le repliement de la partie antérieure (16a) de la base textile (16) et de la capote de protection (19) .

2. Poussette pliable à plat selon la revendication 1, dans laquelle l'arceau principal (20) de la capote de protection (19) est monté sur un élément de la structure, au moyen d'une articulation (21) d'axe perpendiculaire au sens de déplacement de la poussette.

3. Poussette pliable à plat selon l'une quelconque des revendications précédentes, dans laquelle les éléments de fixation (23, 23') de la capote de protection (19) sont détachables.

4. Poussette pliable à plat selon l'une quelconque des revendications précédentes, dans laquelle une partie antérieure de la capote de protection (19) est maintenue fixée sur la partie supérieure du dossier (2).

5. Poussette pliable à plat selon l'une quelconque des revendications précédentes, dans laquelle les tendeurs (18, 18') relient chacun une extrémité supérieure d'un montant de poussoir (1, 1') à une partie supérieure du dossier (2).

6. Poussette pliable à plat selon l'une quelconque des revendications précédentes, dans laquelle le dossier (2) est monté pivotant sur un élément de la structure, au moyen d'une articulation (13) d'axe perpendiculaire au sens de déplacement de la poussette.

7. Poussette pliable à plat selon l'une quelconque des revendications précédentes, dans laquelle le dossier (2) est réversible, pouvant passer en position dépliée de la poussette, d'une première position adaptée pour accueillir un enfant en position allongée, tourné vers l'arrière de la poussette, à une deuxième position adaptée pour accueillir un enfant en position assise, tourné vers l'avant de la poussette.

8. Poussette pliable à plat selon l'une quelconque des revendications précédentes, dans laquelle une partie postérieure (16b) de la base textile (16) est munie d'une plaque rigide (17).

9. Poussette pliable à plat selon l'une quelconque des revendications précédentes, comprenant en outre une plaque dorsale rigide ou semi-rigide (24) dont une extrémité postérieure (24b) est montée pivotante au fond de la base textile (16).

10. Poussette pliable à plat selon l'une quelconque des revendications précédentes, dans laquelle les articulations (41 - 47) permettent, lors du mouvement de la poussette de sa position dépliée à sa position repliée, le basculement vers l'avant des extrémités inférieures des jambes arrières, le basculement vers l'arrière des extrémités inférieures des jambes avant, le repliement des montants du poussoir (1, 1') contre le support d'assise (7), les bords supérieurs des montants du poussoir (1, 1') venant en vis-à-vis de l'extrémité avant du support d'assise (7) et des extrémités supérieures des jambes avant (3, 3').

11. Poussette pliable à plat selon la revendication 10, dans laquelle l'arceau principal (20) de la capote de protection (19) est monté de chaque côté de la poussette sur une extrémité supérieure de la jambe arrière (5,5'), au moyen d'une articulation (21) d'axe perpendiculaire au sens de déplacement de la poussette.

12. Poussette à plat selon la revendication 11, dans laquelle l'axe de l'articulation (21) de l'arceau principal (20) est décalé par rapport à une articulation (44) de la jambe arrière.

13. Poussette pliable à plat selon l'une quelconque des revendications 11 ou 12, dans laquelle le dossier (2) est monté pivotant sur une extrémité inférieure des montants de poussoir (1, 1') au moyen d'une articulation (13) d'axe perpendiculaire au sens de déplacement de la poussette.

14. Poussette pliable à plat selon l'une quelconque des revendications 1 à 13, dans laquelle le système de fixation (15) permet au dossier (2) de coulisser le long des supports d'assise (7, 7').

15. Poussette pliable à plat selon l'une quelconque des revendications 1 à 14, dans laquelle le système de fixation (15) comprend une sangle fixée aux supports d'assise (7, 7').

## Patentansprüche

1. Flach-klappbarer Kinderwagen, welcher zwischen einer ausgeklappten Stellung und einer zusammengeklappten Stellung beweglich ist, umfassend:
- eine Struktur, die zwei Schubstangen (1, 1'), mindestens ein vorderes Bein (3, 3'), mindestens ein hinteres Bein (5, 5'), Sitzstützen (7, 7'), eine Rückenlehne (2) und Gelenke (31-35, 41-47) zum flach Zusammenklappen des Kinderwagens umfasst;
- eine Textilbasis (16);
- Spannvorrichtungen (18, 18') zum Spannen eines vorderen Abschnitts (16a) der Textilbasis (16), welche jeweils ein oberes Ende einer Schubstange (1, 1') mit einem an der Vorderseite des Kinderwagens angeordneten Element der Struktur verbinden;
- eine Schutzhaube (19) mit mindestens einem Hauptbogen (20);
wobei der Kinderwagen **dadurch gekennzeichnet ist, dass**:
- die Schutzhaube (19) ferner Befestigungselemente (23, 23') zum Befestigen jeder Seite des Hauptbogens (20) an mindestens einem Befestigungspunkt von jeder der Spannvorrichtungen (18, 18') oder an mindestens einem Befestigungspunkt des vorderen Abschnitts (16a) der Textilbasis (16) umfasst;
- in der ausgeklappten Stellung die Rückenlehne (2) so positioniert ist, dass ein Kind wenigstens in einer liegenden Position, der Rückseite des Kinderwagens zugewandt aufgenommen werden kann, wobei die Rückenlehne zudem mit einem Befestigungssystem (15) gegen die Sitzstützen (7, 7') gehalten ist;
- in der ausgeklappten Stellung die Spannvorrichtungen (18, 18') gespannt sind und das Ausklappen des vorderen Abschnitts (16a) der Textilbasis (16) und der Schutzhaube (19) ermöglichen;
- während des Zusammenklappens das Vorwärtskippen der Schubstangen (1, 1') das Entspannen der Spannvorrichtungen (18, 18') ermöglicht, was zum Zusammenklappen des vorderen Teils (16a) der Textilbasis (16) und der Schutzhaube (19) führt.

2. Flach-klappbarer Kinderwagen nach Anspruch 1, wobei der Hauptbogen (20) der Schutzhaube (19) an einem Element der Struktur mittels eines Gelenks (21) angebracht ist, dessen Achse senkrecht zur Bewegungsrichtung des Kinderwagens ist.

3. Flach-klappbarer Kinderwagen nach einem der vorhergehenden Ansprüche, wobei die Befestigungselemente (23, 23') der Schutzhaube (19) abnehmbar sind.

4. Flach-klappbarer Kinderwagen nach einem der vorhergehenden Ansprüche, wobei ein vorderer Teil der Schutzhaube (19) fest am oberen Teil der Rückenlehne (2) gehalten ist.

5. Flach-klappbarer Kinderwagen nach einem der vorhergehenden Ansprüche, wobei die Spannvorrichtungen (18, 18') jeweils ein oberes Ende einer Schubstange (1, 1') mit einem oberen Teil der Rückenlehne (2) verbinden.

6. Flach-klappbarer Kinderwagen nach einem der vorhergehenden Ansprüche, wobei die Rückenlehne (2) mittels eines Gelenks (13), dessen Achse senkrecht zur Bewegungsrichtung des Kinderwagens ist, schwenkbar an einem Element der Struktur angebracht ist.

7. Flach-klappbarer Kinderwagen nach einem der vorhergehenden Ansprüche, wobei die Rückenlehne (2) dahingehend umkehrbar ist, dass sie in der ausgeklappten Stellung des Kinderwagens von einer ersten Stellung, in der ein Kind in einer liegenden Position, der Rückseite des Kinderwagens zugewandt aufgenommen werden kann, in eine zweite Stellung, in der ein Kind in einer sitzenden Position, der Vorderseite des Kinderwagens zugewandt aufgenommen werden kann, kommen kann.

8. Flach-klappbarer Kinderwagen nach einem der vorhergehenden Ansprüche, wobei ein hinterer Abschnitt (16b) der Textilbasis (16) mit einer starren Platte (17) versehen ist.

9. Flach-klappbarer Kinderwagen nach einem der vorhergehenden Ansprüche, ferner umfassend eine starre oder halbstarre Rückenplatte (24) mit einem hinteren Ende (24b), das schwenkbar am Boden der Textilbasis (16) angebracht ist.

10. Flach-klappbarer Kinderwagen nach einem der vorhergehenden Ansprüche, wobei, wenn der Kinderwagen aus seiner ausgeklappten Stellung in seine zusammengeklappte Stellung bewegt wird, die Gelenke (41 - 47) das Vorwärtskippen der unteren Enden der hinteren Beine, das Rückwärtskippen der unteren Enden der vorderen Beine, das Einklappen der Schubstangen (1, 1') gegen die Sitzstütze (7) ermöglichen, wobei die oberen Kanten der Schubstangen (1, 1') dem vorderen Ende der Sitzstütze (7) und den oberen Enden der vorderen Beine (3, 3') zugewandt werden.

11. Flach-klappbarer Kinderwagen nach Anspruch 10, wobei der Hauptbogen (20) der Schutzhaube (19) an jeder Seite des Kinderwagens an einem oberen Ende des hinteren Beins (5, 5') mittels eines Gelenks (21) angebracht ist, dessen Achse senkrecht zur Bewegungsrichtung des Kinderwagens ist.

12. Flach-klappbarer Kinderwagen nach Anspruch 11, wobei die Achse des Gelenks (21) des Hauptbogens (20) relativ zu einem Gelenk (44) des hinteren Beins versetzt ist.

13. Flach-klappbarer Kinderwagen nach einem der Ansprüche 11 oder 12, wobei die Rückenlehne (2) an einem unteren Ende der Schubstangen (1, 1') mittels eines Gelenks (13) schwenkbar angebracht ist, dessen Achse senkrecht zur Bewegungsrichtung des Kinderwagens ist.

14. Flach-klappbarer Kinderwagen nach einem der Ansprüche 1 bis 13, wobei das Befestigungssystem (15) ein Gleiten der Rückenlehne (2) entlang der Sitzstützen (7, 7') ermöglicht.

15. Flach-klappbarer Kinderwagen nach einem der Ansprüche 1 bis 14, wobei das Befestigungssystem (15) einen an den Sitzstützen (7, 7') befestigten Gurt umfasst.

## Claims

1. Flat-folding pushchair which is moveable between an unfolded position and a folded position, comprising:
- a structure comprising two handle uprights (1, 1'), at least one front leg (3, 3'), at least one rear leg (5, 5'), seat supports (7, 7'), a backrest (2), and hinges (31-35, 41-47) for folding the pushchair flat;
- a textile base (16);
- tensioners (18, 18') for tensioning a front part (16a) of the textile base (16) and each connecting an upper end of a handle upright (1, 1') to a structural element situated at the front of the pushchair;
- a protective cover (19) with at least one main bow (20) ;
said pushchair being **characterized in that**
- the protective cover (19) also comprises fixing elements (23, 23') allowing each side of the main bow (20) to be fixed to at least one fixing point of each of the tensioners (18, 18') or to at least one fixing point of the front part (16a) of the textile base (16);
- in the unfolded position, the backrest (2) is positioned to hold a child at least in a lying position facing the rear of the pushchair, said backrest being also held against the seat supports (7, 7') thanks to a fixing system (15);
- in the unfolded position, the tensioners (18, 18') are tensioned and allow deployment of the front part (16a) of the textile base (16) and the protective cover (19);
- on folding, the forward swivelling of the handle uprights (1, 1') loosens the tensioners (18, 18'), causing the folding of the front part (16a) of the textile base (16) and the protective cover (19).

2. Flat-folding pushchair according to Claim 1, wherein the main bow (20) of the protective cover (19) is mounted on a structural element by means of a hinge (21) with axis perpendicular to the direction of movement of the pushchair.

3. Flat-folding pushchair according to any of the preceding claims, wherein the fixing elements (23, 23') of the protective cover (19) are detachable.

4. Flat-folding pushchair according to any of the preceding claims, wherein a front part of the protective cover (19) is held fixed to the upper part of the backrest (2) .

5. Flat-folding pushchair according to any of the preceding claims, wherein the tensioners (18, 18') each connect an upper end of a handle upright (1, 1') to an upper end of the backrest (2).

6. Flat-folding pushchair according to any of the preceding claims, wherein the backrest (2) is mounted pivoting on a structural element by means of a hinge (13) with axis perpendicular to the direction of movement of the pushchair.

7. Flat-folding pushchair according to any of the preceding claims, wherein the backrest (2) is reversible in that, in the unfolded position of the pushchair, it can move from a first position adapted to hold a child in the lying position facing the rear of the pushchair, to a second position adapted to hold a child in the seated position facing the front of the pushchair.

8. Flat-folding pushchair according to any of the preceding claims, wherein a rear part (16b) of the textile base (16) is fitted with a rigid plate (17).

9. Flat-folding pushchair according to any of the preceding claims, wherein it also comprises a rigid or semirigid dorsal plate (24), a rear end (24b) of which is mounted pivoting at the back of the textile base (16).

10. Flat-folding pushchair according to any of the preceding claims, wherein, on movement of the pushchair from its unfolded position to its folded position, the hinges (41 - 47) allow the forward swivelling of the lower ends of the rear legs, the rearward swivelling of the lower ends of the front legs, the folding of the handle uprights (1, 1') against the seat support (7), wherein the upper edges of the handle uprights (1, 1') come to face the front end of the seat support (7) and the upper ends of the front legs (3, 3').

11. Flat-folding pushchair according to Claim 10, wherein the main bow (20) of the protective cover (19) is mounted on an upper end of the rear leg (5, 5') on each side of the pushchair by means of a hinge (21) with axis perpendicular to the direction of movement of the pushchair.

12. Flat-folding pushchair according to Claim 11, wherein the axis of the hinge (21) of the main bow (20) is offset in relation to a hinge (44) of the rear leg.

13. Flat-folding pushchair according to one of Claims 11 or 12, wherein the backrest (2) is mounted pivoting on a lower end of the handle uprights (1, 1') by means of a hinge (13) with axis perpendicular to the direction of movement of the pushchair.

14. Flat-folding pushchair according to any of Claims 1 to 13, wherein the fixing system (15) allows the backrest (2) to slide along the seat supports (7, 7').

15. Flat-folding pushchair according to any of Claims 1 to 14, wherein the fixing system (15) comprises a strap fastened to the seat supports (7, 7').
